(19)

Europäisches
Patentamt
European
Patent Office
Office européen
des brevets

(11) **EP 1 758 225 A2**

(12) **EUROPEAN PATENT APPLICATION**

(43) Date of publication:
**28.02.2007 Bulletin 2007/09**

(51) Int Cl.:
***H02J 3/14***[(2006.01)]

(21) Application number: **06119546.7**

(22) Date of filing: **25.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **26.08.2005 JP 2005245260**

(71) Applicant: **SANYO ELECTRIC CO., LTD.**
**Moriguchi-shi, Osaka, (JP)**

(72) Inventors:
- **Nakajima, Hideki**
  **c/o Sanyo Electric Co., Ltd.**
  **Osaka, 570-8677 (JP)**
- **Kawaai, Tsuyoshi**
  **c/o Sanyo Electric Co., Ltd.**
  **Osaka, 570-8677 (JP)**

(74) Representative: **Read, Matthew Charles**
**Venner Shipley LLP**
**20 Little Britain**
**London EC1A 7DH (GB)**

(54) **Apparatus, method and program for electric power amount control**

(57)    An electric power amount control apparatus controls, as its control target devices, a plurality of showcases for cooling food and a plurality of refrigerators, among others. When the predicted consumed electric power amount exceeds the contracted electric power amount, the refrigerators corresponding to the showcases whose current interior temperatures deviate little from the set interior temperature are selected, and the set temperature for all the showcases connected to those refrigerators is changed to a temperature higher than a predetermined value. This makes it possible to shorten the duration of pull-down operation and thereby reduce the electric power consumption by the refrigerators while preventing the food inside the showcases from melting and degrading in quality.

**FIG.1**

**Description**

**BACKGROUND OF THE INVENTION**

1. Field of the Invention

The present invention relates to control of the operation status of a control target device based on predicted electric power consumption thereof, and is particularly suitable for use in a demand control apparatus or the like.

2. Description of Related Art

When signing a contract with an electric power supplier, an electric power user can choose to enter into a demand-based contract. In a demand-based contract, the amount of electric power to be supplied according to the contract (the contracted electric power amount) is set in light of a demand value. A demand value denotes, with respect to the amount of electric power demanded (the demanded electric power amount) during a given unit of time (for example, one month), the maximum value thereof among those calculated for every 30 minutes' time span by an electric power demand meter (demand meter). A demand meter can store and keep updated the maximum value of the demanded electric power amount.

As part of the charge to be paid to the electric power supplier, a basic charge is calculated on the basis of the contracted electric power amount, which in turn is determined in light of the past demand value. The contracted electric power amount is set as an upper limit value below which the electric power user is entitled to consume electric power for every 30 minutes' time span. If, even only once in a given month, the demanded electric power amount exceeds the contracted electric power amount, the contracted electric power amount is updated upward readily starting with the next month, and this takes place even if the demanded electric power amount does not actually exceed the contracted electric power amount that month. The updated (raised) charge will then remain valid for the twelve months starting with that month.

As described above, in a demand-based contract, the demanded electric power amount is measured for every 30 minutes' time span, and then, on the basis of the maximum value (that is, the demand value) thereof among those measured during a given unit of time (for example, one month), the contracted electric power amount is calculated as a basis on which to calculate the basic charge. This is the reason that there have been demands for control (demand control) whereby the demanded electric power amount for every 30 minutes' time span is so controlled as to always remain within the contracted electric power amount.

To meet the requirement, there have been used demand control apparatuses. A demand control apparatus operates as follows. Within every 30 minutes' time span set for the contracted electric power amount as mentioned above, the amount of electric power consumed by load devices as a whole (for example, air conditioners, refrigerator/ freezer showcases, and illuminations) up to the moment is acquired from a demand meter, and, at that moment, the amount of electric power that can still be used out of the contracted electric power amount during the rest (for example, 10 minutes) of the time span is calculated. On the other hand, at the same moment, the predicted value of the amount of electric power that is expected to be consumed by the load devices as a whole during the rest of the time span is calculated.

Then the still usable electric power amount and the predicted consumed electric power amount thus calculated are compared. Here, if the predicted consumed electric power amount is likely to exceed the still usable electric power amount, the operation of part of the load devices is so restricted or controlled as to reduce the amount of electric power being consumed. In this way, within one time span for the contracted electric power amount after the next, the demand control apparatus, while repeatedly calculating the still usable electric power amount and the predicted consumed electric power amount, restricts or controls the operation of the individual load devices so that the demanded electric power amount does not exceed the contracted electric power amount.

In a food store or the like, stopping the operation of air conditioners, if only for a short while, does not greatly affect the conditions inside the store. For this reason, air conditioners are often the preferred choice as target devices whose operation is restricted or controlled through the control described above. Specifically, air conditioners are fed with an instruction to stop the operation thereof so that they stop their cooling, heating, blowing, or other operation so as thereby to reduce the amount of electric power being consumed. A further reduction, if necessary, in the amount of electric power being consumed can be achieved by increasing the number of target devices whose operation is stopped. Here, refrigerator units/condensers, which consume a large proportion of the amount of electric power consumed in the store as a whole, may be chosen among the target devices whose operation is stopped.

Inconveniently, however, refrigerator units/condensers are usually operated according to the operation status of refrigerator/freezer showcases for cooling food, and hence the operation of refrigerator units/condensers themselves often cannot be directly controlled from a demand control apparatus or the like. Where this is the case, what matters is how to control the operation of refrigerator units/condensers.

Moreover, in a food store or the like, if the operation of refrigerator units/condensers are forcibly stopped with no attention paid to the operation status of or the conditions inside refrigerator/freezer showcases, inconveniently, the food kept inside the refrigerator/freezer showcases may melt and degrade in quality. Moreover, once the operation of refrigerator units/condensers is stopped, when their operation is restarted after the stop, their restarting operation (corresponding to "pull-down operation" described later) consumes an increased amount of electric power.

Incidentally, JP-A-H10-339546 discloses an example of a demand control apparatus. This demand control apparatus is for use in a refrigerating/freezing storehouse.

## SUMMARY OF THE INVENTION

In view of the conventionally encountered inconveniences mentioned above, it is an object of the present invention to provide an electric power amount control apparatus, and an electric power amount control method for use therein, that permits desired control of a device that cannot be directly controlled. More particularly, it is an object of the present invention to provide an electric power amount control apparatus, and an electric power amount control method for use therein, that can reduce the amount of consumed electric power by shortening the period of cooling operation performed after defrosting operation while paying attention to the status of a refrigerator/freezer showcase.

To achieve the above objects, according to the present invention, an electric power amount control apparatus is provided with: predicted consumed electric power amount calculating means for predicting, as a predicted consumed electric power amount, the total amount of electric power expected to be consumed in a given unit period by a device unit including a direct-control target device whose operation status is controlled directly by receiving instruction information and an indirect-control target device whose operation status is controlled indirectly according to the operation status of the direct-control target device; and device controlling means for controlling the operation status of the direct-control target device by generating the instruction information based on the predicted consumed electric power amount and then outputting the instruction information to the direct-control target device. Here, the device controlling means changes the operation status of the direct-control target device based on the result of comparison between the predicted consumed electric power amount and a previously set threshold value, and through this change the operation duration of the indirect-control target device, which is operated according to the operation status of the direct-control target device, is changed.

Thus, according to the present invention, instruction information is outputted to a direct-control target device, and thereby the operation status of the direct-control target device (for example, its operation duration) is changed; through this change, the operation duration of an indirect-control target device that is operated according to the operation status of the direct-control target device can be changed indirectly. The operation status of an indirect-control target device often cannot be changed directly, in which case the present invention proves to be useful.

Specifically, for example, in the electric power amount control apparatus described above, the direct-control target device may be a device for controlling the temperature inside the direct-control target device itself, and the instruction information may include information specifying a set temperature to be followed by the temperature.

Moreover, for example, in the electric power amount control apparatus described above, when the predicted consumed electric power amount is larger than a predetermined electric power amount previously set as the threshold value, the device controlling means may output the instruction information so as to change the set temperature and thereby shorten the operation duration of the indirect-control target device.

With this configuration, for example, in a case where a demand-based contract as described previously is applied, the basic electric charge is expected to be reduced.

More specifically, for example, in the electric power amount control apparatus described above, the direct-control target device may be a refrigerator/freezer showcase that is built to be capable of cooling an interior of the direct-control target device by use of a refrigerant, the indirect-control target device may be a refrigerant feeding device that feeds out the refrigerant to the direct-control target device, and, when the predicted consumed electric power amount is larger than the predetermined electric power amount, the device controlling means may make the set temperature corresponding to the cooling operation performed by using the refrigerant feeding device after defrosting operation of the refrigerator/freezer showcase higher than when the predicted consumed electric power amount is smaller than the predetermined electric power amount and thereby make the operation duration of the cooling operation shorter than when the predicted consumed electric power amount is smaller than the predetermined electric power amount.

Cooling operation after defrosting operation of a refrigerator/freezer showcase consumes a comparatively large amount of electric power, and the electric power consumption then usually takes a large proportion of the total electric power consumption. Accordingly, when the predicted consumed electric power amount is larger than a predetermined electric power amount, the set temperature for cooling operation after defrosting operation is made higher than when the predicted consumed electric power amount is smaller than the predetermined electric power amount. This shortens the operation duration (execution duration) of the cooling operation, and thus, for example, in a case where a demand-based contract as described previously is applied, the basic electric charge is expected to be reduced.

For example, in a case where the refrigerant feeding device is a refrigerator unit/condenser, it is often difficult to control the refrigerator unit/condenser directly to stop its operation. With the configuration described above, by contrast, it is possible to control the refrigerator unit/condenser indirectly to stop its operation.

Moreover, for example, in the electric power amount control apparatus described above, the device unit may include a plurality of direct-control target devices and a plurality of indirect-control target devices, the device controlling means may calculate the deviations of the temperatures inside the individual direct-control target devices from the set temperature and, based on the calculated deviations, select from among the indirect-control target devices, part of them so that, based on the result of the comparison between the predicted consumed electric power amount and the threshold value, the device controlling means can change the operation status of the direct-control target device corresponding to the selected indirect-control target device so as to thereby change the operation duration of the selected indirect-control target device.

Which direct-control target device to select to change its operation status is determined based on the deviations mentioned above. Thus, in a case where the indirect-control target devices are refrigerator units/condensers, it is possible, for example, to automatically select only the refrigerator units/condensers whose operation can be stopped without degrading the quality of food.

According to the present invention, an electric power amount control method includes: a step of predicting, as a predicted consumed electric power amount, the total amount of electric power expected to be consumed in a given unit period by a device unit including a direct-control target device whose operation status is controlled directly by receiving instruction information and an indirect-control target device whose operation status is controlled indirectly according to the operation status of the direct-control target device; and a step of controlling the operation status of the direct-control target device by generating the instruction information based on the predicted consumed electric power amount and then outputting the instruction information to the direct-control target device. Here, the operation status of the direct-control target device is changed based on the result of comparison between the predicted consumed electric power amount and a previously set threshold value, and through this change the operation duration of the indirect-control target device, which is operated according to the operation status of the direct-control target device, is changed.

Specifically, for example, in the electric power amount control method described above, the direct-control target device may be a device for controlling the temperature inside the direct-control target device itself, and the instruction information may include information specifying a set temperature to be followed by the temperature.

Moreover, in the electric power amount control method described above, when the predicted consumed electric power amount is larger than a predetermined electric power amount previously set as the threshold value, the instruction information may be outputted so as to change the set temperature so that thereby the operation duration of the indirect-control target device is shortened.

More specifically, for example, in the electric power amount control method described above, the direct-control target device may be a refrigerator/freezer showcase that is built to be capable of cooling the interior of the direct-control target device by use of a refrigerant, the indirect-control target device may be a refrigerant feeding device that feeds out the refrigerant to the direct-control target device, and, when the predicted consumed electric power amount is larger than the predetermined electric power amount, the set temperature corresponding to the cooling operation performed by using the refrigerant feeding device after defrosting operation of the refrigerator/freezer showcase may be made higher than when the predicted consumed electric power amount is smaller than the predetermined electric power amount so that thereby the operation duration of the cooling operation is made shorter than when the predicted consumed electric power amount is smaller than the predetermined electric power amount.

Moreover, in the electric power amount control method described above, the device unit includes a plurality of direct-control target devices and a plurality of indirect-control target devices; the deviations of the temperatures inside the individual direct-control target devices from the set temperature are calculated, and based on the calculated deviations, from among the indirect-control target devices, part of them are selected so that, based on the result of the comparison between the predicted consumed electric power amount and the threshold value, the operation status of the direct-control target device corresponding to the selected indirect-control target device is changed and thereby the operation duration of the selected indirect-control target device is changed.

In the electric power amount control apparatus and the electric power amount control method described above, the "device unit" denotes, for example, all the devices connected to a single wattmeter for measuring the amount of electric power consumed. Moreover, in the electric power amount control apparatus and the electric power amount control method described above, the "temperature inside a direct-control target device" denotes, for example, the temperature in a particular part (such as a cooling compartment) inside the direct-control target device. Moreover, in the electric power amount control apparatus and the electric power amount control method described above, the "refrigerant feeding device" denotes, for example, a refrigerator unit/condenser provided outside or inside a refrigerator/freezer showcase.

Moreover, in the electric power amount control apparatus and the electric power amount control method described above, an indirect-control target device may be shared as a direct-control target device; the device unit may include a device that is neither a direct-control target device or an indirect-control target device.

According to the present invention, a first program enables a computer to execute the functions of the individual means provided in the electric power amount control apparatus described above.

According to the present invention, a second program enables a computer to execute the electric power amount control method described above.

The significance and benefits of the present invention will become clear through the following description of embodiments thereof.

It should however be understood that the embodiments described below are merely examples of how the present invention can be carried out, and therefore that the meanings of the terms used to refer to the features and components of the present invention are not limited to those in which they are used in the following description.

## BRIEF DESCRIPTION OF THE DRAWINGS

FIG. 1 is a diagram showing the interconnection among a demand control apparatus embodying the present invention and individual load devices;
FIG. 2 a is a functional block diagram of the store controller shown in FIG. 1;
FIG. 3 is a flow chart showing the entire operation for demand control performed by the store controller shown in FIG. 1;
FIG. 4 is a flow chart showing, as part of the demand control shown in FIG. 3, the procedure for creating learned data;
FIG. 5 is a flow chart showing, as part of the demand control shown in FIG. 3, the procedure for performing prediction calculation;
FIG. 6 is a flow chart showing, as part of the demand control shown in FIG. 3, the procedure for controlling the operation of the individual control target devices; and
FIG. 7 is a flow chart showing, as part of the procedure shown in FIG. 6, the procedure for controlling the restriction of the operation of the refrigerator.

## DETAILED DESCRIPTION OF PREFERRED EMBODIMENTS

Hereinafter, an embodiment of the present invention will be described with reference to the drawings. Throughout the drawings, the same parts are identified with common reference numerals.

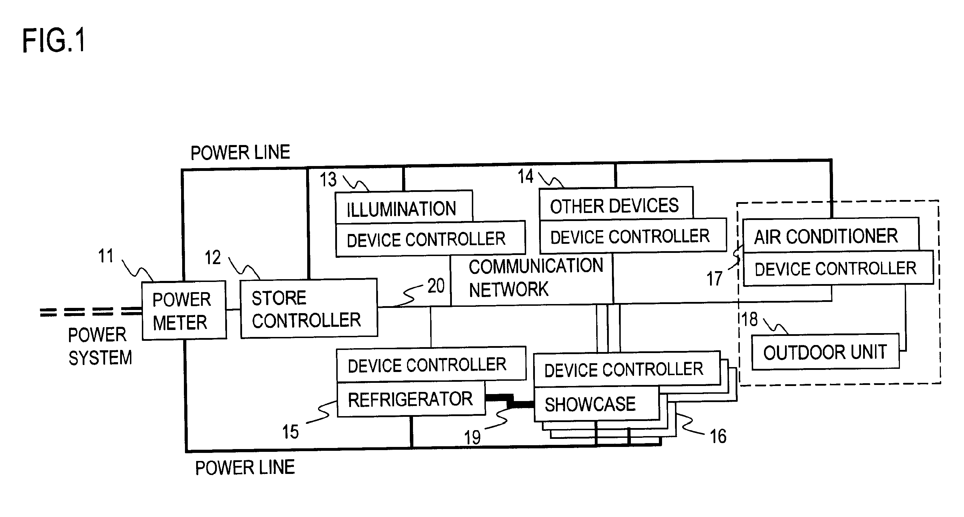

FIG. 1 is a diagram showing the interconnection among a demand control apparatus embodying the present invention and individual load devices.

In FIG. 1, reference numeral 11 represents a power meter; reference numeral 12 represents a store controller, which includes a demand control apparatus that functions as an electric power amount control apparatus; reference numeral 13 represents an illumination; reference numeral 14 represents arbitrary devices other than those already mentioned (these arbitrary devices will hereinafter be referred to as "the other devices"); reference numeral 15 represents refrigerator units/condensers for cooling refrigerator/freezer showcases (the refrigerator units/condenser thus serves as a refrigerant feeding device); reference numeral 16 represents refrigerator/freezer showcases; reference numeral 17 represents an air conditioner; reference numeral 18 represents an outdoor unit of the air conditioner 17; and reference numeral 19 represents a refrigerant pipe. In the following description, "refrigerator unit/condenser" is abridged to "refrigerator", and the "refrigerator/freezer showcase" is abridged to "showcase".

In FIG. 1, there is shown only one of each of reference numeral 15 representing the refrigerators and reference numeral 16 representing the showcases; in the following description, however, it is assumed that there are provided a plurality of refrigerators 15 and a plurality of the showcases 16.

In FIG. 1, the functional blocks represented by reference numerals 11 to 18, a power line, and a communication network 20 together form an electric power control system, in which the store controller 12 performs demand control (direct control).

The power meter 11 measures the amount of electric power consumed by all the load devices connected to the power system; that is, the power meter 11 measures the amount of electric power consumed by the load devices as a whole, including the functional blocks represented by reference numerals 11 to 18 and the functional blocks accompanying them (such as the device controllers described later). In the following description, unless otherwise stated, all references to amounts of electric power refer to the amount of electric power consumed by the load devices as a whole.

As shown in FIG. 1, the illumination 13, the other devices 14, the refrigerators 15, the showcases 16, and the air conditioner 17 each have a device controller connected thereto that is connected over the network 20 to the store controller 12.

Each device controller sets the operation conditions of the device (such as a showcase 16) connected thereto, and controls the operation of the device connected thereto. Such setting and control are performed over the network 20 according to instructions from the store controller 12, or through manual operation performed on the device controller (or the device connected thereto) itself.

In this embodiment, the store controller 12 deals with, as control target devices, the illumination 13, the other devices 14, the refrigerators 15, the showcases 16, and the air conditioner 17. The outdoor unit 18 may also be regarded as being included among the control target devices. The store controller 12 reads, whenever necessary, data representing the operation status of the individual control target devices to collect such data. The store controller 12 also reads data representing the results of measurement by the power meter 11.

Incidentally, the store controller 12 may be connected to the Internet (unillustrated). In this case, the administrator can perform various kinds of setting, control, monitoring, measurement, management, etc. on the store controller 12 and the individual control target devices.

As described above, the store controller 12 can set the operation conditions of and control the operation of the individual control target devices, but not always with the refrigerators 15; even then, the store controller 12 can monitor the operation status of the refrigerators 15 and reads necessary data through measurement or otherwise. Though different from the interconnection adopted in this embodiment, even an interconnection is possible in which the refrigerators 15 (more precisely, the device controllers connected to the refrigerators 15) are not connected over the network 20 to the store controller 12.

Each refrigerator 15 is combined with one or more showcases 16, with their refrigerating systems connected together, to form one complete cooling circuit. Here, connecting refrigerating systems together denotes that one refrigerator 15 and one or more showcases 16 are connected together by a common refrigerant pipe 19. In FIG. 1, only one cooling circuit is shown; in the embodiment under discussion, however, it is assumed that there are provided a plurality of cooling circuits. In each cooling circuit, the refrigerant fed out from the refrigerator 15 is fed through the refrigerant pipe 19 to the showcase(s) 16 connected thereto.

For example, each showcase 16 is like a box in the shape of a rectangular parallelepiped that is open at one face, and cools the food accommodated inside the box. In each showcase 16, the space in which food is accommodated and cooled is called the cooling space. The cooling space corresponds to the cooling compartment.

Each showcase 16 has a solenoid valve (unillustrated) connected thereto so that, by controlling the degree of opening of the solenoid valve, the amount of refrigerant that flows therethrough can be freely controlled. Thus, by controlling the degree of opening of each solenoid valve, the amount of refrigerant taken in by the corresponding showcase 16 is adjusted on its part, and thereby the degree of cooling achieved in its cooling space is adjusted.

The refrigerators 15 are used to perform cooling operation in the corresponding showcases 16. Thus, the refrigerators 15 operate according to the cooling operation in the showcases 16, but do not have their operation turned on and off directly by the showcases 16. The temperatures and the pressures of the refrigerant circulated through the refrigerant pipes 19 vary according to the cooling status (operation status) in the corresponding showcases 16, and the operation status of the refrigerators 15 is changed according to the status of the refrigerant. That is, in each cooling circuit, the refrigerator 15 has its operation turned on and off indirectly according to the operation status of the corresponding showcase 16.

Each showcase 16 performs defrosting operation between different sessions of cooling operation. It is known that cooling performance is degraded by frost that grows on the refrigerating tube (heat exchanger, evaporator) laid around the showcases 16. The frost thus needs to be removed, and this is achieved by defrosting operation. To perform defrosting operation, the showcase 16 closes its solenoid valve, and turns on a defrosting heater. After defrosting operation has been performed for a prescribed period considered long enough to remove frost, the defrosting heater is turned off, and the solenoid valve is opened to perform quick cooling, thereby restarting cooling operation. This operation performed to return to cooling operation by performing quick cooling with the solenoid valve of the showcase 16 reopened after it is once closed to stop the operation of the refrigerators 15 is called pull-down operation.

The quick cooling here is one of the factors that produce peaks in the amount of electric power consumed. For each showcase 16, when to perform defrosting operation is previously scheduled. The defrosting operation is performed approximately in the same time zone every day. The above scheduling is so made that the periods in which defrosting operation is performed for the individual showcases 16 are so distributed that the peaks in the amount of electric power they consume do not overlap. Information on this scheduling is set in the store controller 12 or on the device controllers of the showcases 16.

The behavior of the individual showcases 16 differ due to differences in their characteristics, the environment around them, and the articles they cool. Thus, in a case where a large number of showcases 16 are used simultaneously, it is extremely difficult to grasp the characteristic of the overall electric consumption. That is, to predict the amounts of electric power consumed by a plurality of showcases 16 with high accuracy through theoretical calculation, it is necessary to take into consideration various factors such as individual differences as mentioned above, and this requires extremely complicated calculation. The various factors include the influence of air conditioning; that is, air conditioning has not a small influence on the cooling of articles in the showcases, and this cannot be coped with by simple calculation.

Out of the above considerations, the amount of electric power expected to be consumed may be predicted not with a theoretically calculated value but, for example, by use of learned data or the like as represented by an information table or the like. In the information table is stored, for example, a dynamic history of the operation status of main load devices, such as the showcases 16 and the air conditioner 17, that consume comparatively large amounts of electric power. With such learned data, advantageously, there is no need to perform theoretical calculation weighted accurately according to the actual conditions, and it is possible to make predictions according to different specific conditions. As will be described later, in this embodiment, electric power consumption is predicted by use of such learned data.

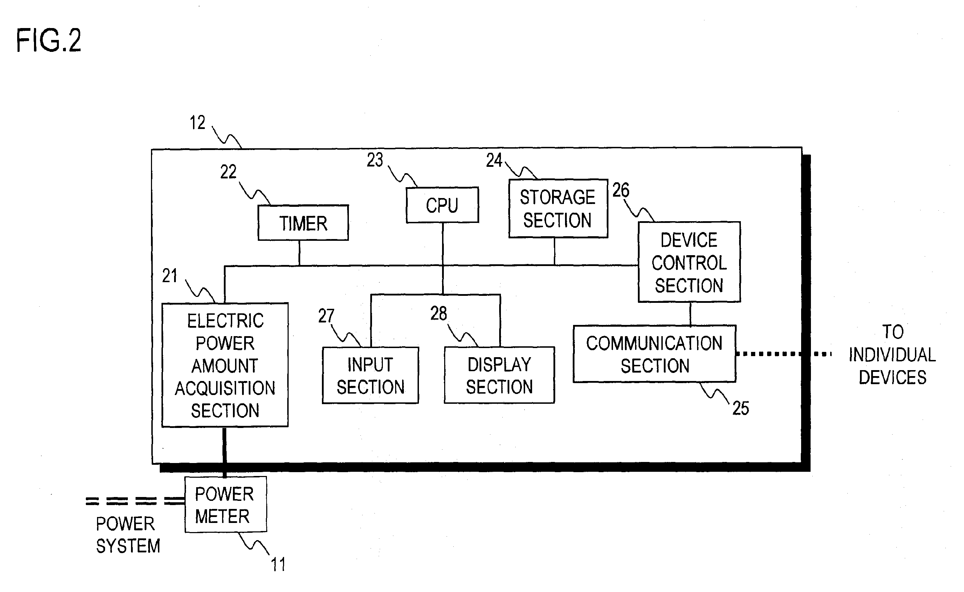

Fig. 2 is a diagram showing the functional blocks of the store controller 12. In Fig. 2, reference numeral 21 represents an electric power amount acquisition section that acquires electric power amount data from the power meter 11; reference numeral 22 represents a timer (such as a clock) that manages time; reference numeral 23 represents a CPU (central processing unit) that controls the different parts of the store controller 12, performs necessary processing, and otherwise operates; reference numeral 24 represents a storage section that is a memory or other storage device; reference numeral 25 represents a communication section that communicates with the device controllers connected to the control target devices; reference numeral 26 represents a device control section that, via the communication section 25, controls the control target devices, gathers necessary data, and otherwise operates; reference numeral 27 represents an input section via which various settings and the like are made on the store controller 12; and reference numeral 28 represents a display section, such as a liquid crystal display screen, that is used when various settings and the like are made on the store controller 12.

The store controller 12 is installed in a store or the like to which a demand-based contract as described earlier is applied. The store controller 12 makes predictions, and controls and restricts the operation of the control target devices. This embodiment deals with an example where the time span set for the contracted electric power amount is 30 minutes. As described earlier, the contracted electric power amount corresponds to the upper limit of the amount of electric power below which the electric power user is entitled to consume every set time span. In the following description, the contracted electric power amount is represented by W1.

Moreover, the following description deals with an example where the set time span starts at 9:00am and ends 9:30am of the same day. Thus, this set time span is followed by the time span that starts at 9:30am and ends 10:00am of the same day.

First, the store controller 12 acquires electric power amount data from the power meter 11 via the electric power amount acquisition section 21. The electric power amount data represents the total amount of electric power that has been consumed by the load devices connected to the power system as a whole after the start of the set time span up until the moment. In the following description, this total amount will be called the accumulated consumed electric power amount W2. Based on the acquired electric power amount data and the contracted electric power amount W1, the store controller 12 calculates the amount of electric power that can be consumed before the end of the set time span (that is, W1 - W2).

Next, the store controller 12 predicts the amount of electric power that is expected to be consumed from the moment onward. To make this prediction, the store controller 12 uses the above-mentioned information table in which a dynamic history of the operation status of main load devices is stored. For this purpose, the store controller 12 communicates with the device controllers of the individual control target devices by using the device control section 26 and the communication section 25, and acquires data representing the operation status of the control target devices and data representing the settings made in the control target devices, both as currently obtained. The store controller 12 makes various settings on the control target devices, and those settings can be changed directly on the control target devices. This is the reason that the store controller 12 communicates with the control target devices to grasp their latest operation status etc. The calculation of the value of the predicted consumed electric power amount is performed mainly by CPU 23, for example, every minute.

Lastly, based on the value of the predicted consumed electric power amount, the store controller 12 checks whether or not the used electric power amount is likely to exceed the contracted electric power amount W1. If it is found that the sum of the amount of electric power that is expected to be consumed from the moment before the end of the set time span and the accumulated consumed electric power amount W2 up until the moment exceeds the contracted electric power amount W1, the store controller 12 restricts the operation of particular devices to reduce the amount of electric power that is going to be consumed from the moment onward.

Specifically, via the communication section 25, the device control section 26, for example, stops the operation of the outdoor unit of a certain air conditioner that is considered to have little influence on other devices or stops the operation of the whole air conditioner, and thereby reduces the amount of electric power consumed. If, even then, it is found that a desired reduction in the consumed electric power amount cannot be achieved, the store controller 12 sounds a buzzer or otherwise makes a human aware that no reduction in the consumed electric power amount is possible, and leaves him to decide what control to perform thereafter. That is, it leaves the human to make decisions and judgments to manually restrict the operation of the devices in order to reduce the consumed electric power amount.

In this embodiment, however, when the reduction in the consumed electric power amount is insufficient as described above, demand control is so performed as to stop the operation of the refrigerators 15. In the amount of electric power consumed in the entire store, the amount of electric power consumed by the refrigerators 15 during pull-down operation takes a very large proportion. This is the reason that a reduction is attempted in the amount of electric power consumed by the refrigerators 15.

Here, however, consideration needs to be given to the following fact: a refrigerator 15 is often connected to a plurality of showcases 16 and in addition even to unillustrated refrigerator/freezer devices, and it thus operates while receiving cooling instructions and requests individually from the devices connected thereto. Therefore, if the operation of the refrigerators 15 is forcibly stopped without giving consideration to the operation status of the devices connected thereto or the conditions inside the showcases 16, the quality of food may be affected adversely. In addition, once the refrigerators are stopped, when their operation is restarted, they consume an increased amount of electric power during pull-down operation.

Out of the above considerations, to reduce the operation duration of pull-down operation while paying attention to the operation status of the showcases 16 and the conditions inside the showcases 16, the store controller 12 restricts the operation of the relevant devices in the manner described below.

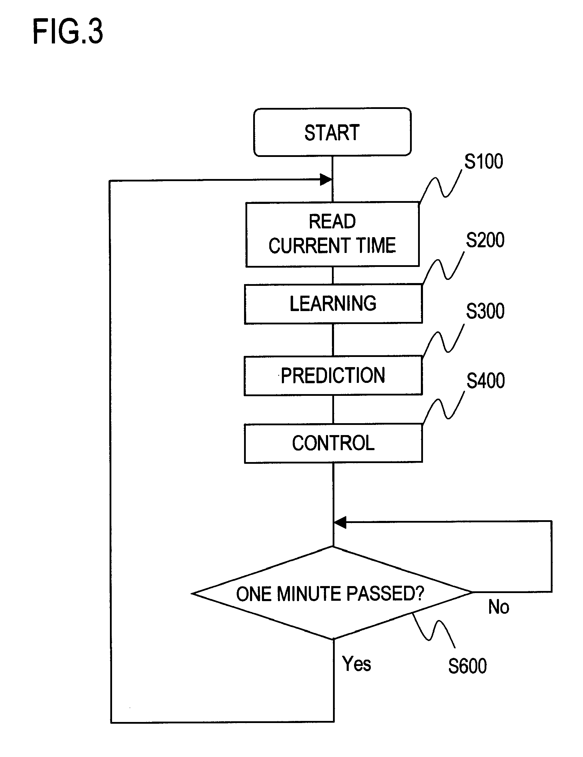

FIG. 3 is a flow chart showing the entire operation for demand control performed by the store controller 12 (mainly the CPU 23).

When the supply of electric power to the store controller 12 is started, the flow proceeds to step S100, and then executes steps S100, S200, S300, S400, and S600 in this order.

In step S100, the store controller 12 (CPU 23) reads the current time by using the timer 22.

In step S200, the store controller 12 (CPU 23) creates and updates the previously mentioned learned data; that is, it performs learning operation.

In step S300, the store controller 12 (CPU 23) performs calculation to predict electric power consumption.

In step S400, the store controller 12 (CPU 23) controls the operation of the control target devices.

In step S600, the store controller 12 (CPU 23) waits for one minute to pass. When one minute has passed, the flow returns to step S100.

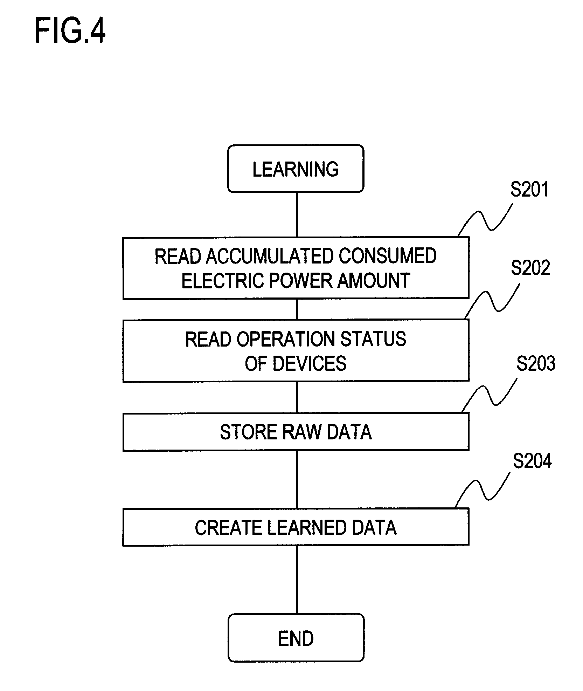

FIG. 4 is a flow chart showing the procedure for creating learned data, which is executed in step S200 shown in FIG. 3. The procedure of step S200 in FIG. 3 involves the operations of steps S201 to S204 in FIG. 4, and the flow executes steps S201, S202, S203, and S204 in this order.

First, in step S201, the store controller 12 reads, from the power meter 11, electric power amount data representing the current accumulated consumed electric power amount W2.

In step S202, the store controller 12 reads, over the network 20, data representing the current operation status of the individual control target devices (hereinafter referred to as the "operation status data").

In step S203, the controller 12 (CPU 23) stores, in the storage section 24, raw data including the electric power amount data and the operation status data read in steps S201 and S202. This raw data also includes data representing the current time read in step S100. Incidentally, in the raw data, the operation status data is, for example, in the form of bit strings.

In step S204, based on the raw data, the store controller 12 creates learned data to be used in the prediction calculation in step S300. The learned data contains, for example, time zones, bit strings representing the operation status of the control target devices (that is, operation status data), average accumulated electric power amounts, maximum accumulated electric power amounts, etc, and these different items of data are associated with one another. The learned data is stored, for example, in the storage section 24.

Here, "time zones" are those obtained by dividing 24 hours into periods of predetermined lengths. Fore example, dividing 24 hours into two-hour periods produces a total of 12 time zones, namely "0:00 to 2:00", "2:00 to 4:00", .... For example, when the current time is 9:10, it belongs to the time zone of "8:00 to 10:00". For efficient prediction calculation, which will be described later, and out of other considerations, the learned data is so created as to contain, instead of raw data representing time points themselves, the time zones to which those time points belong.

The average accumulated electric power amount corresponding to a given time zone represents, for example, the average value of the accumulated consumed electric power amount per minute within that time zone. The maximum accumulated electric power amount corresponding to a given time zone represents, for example, the maximum value of the accumulated consumed electric power amount per minute within that time zone. The average accumulated electric power amount and the maximum accumulated electric power amount are calculated by use of the electric power amount data acquired periodically.

The average accumulated electric power amount and the maximum accumulated electric power amount are calculated for each of different sets of "the operation status of the individual control target devices", and are stored as learned data. That is, for example, let a certain set of "the operation status of the individual control target devices" be called the first operation state, and let another certain set of "the operation status of the individual control target devices" be called the second operation state, then the average accumulated electric power amount and the maximum accumulated electric power amount corresponding to the first operation status and the average accumulated electric power amount and the maximum accumulated electric power amount corresponding to the second operation status are calculated separately, and are stored as learned data. For example, the first operation status is that in which "a first showcase is performing defrosting operation and a second showcase is performing pull-down operation", and the second operation status is that in which "the first and second showcases are both performing defrosting operation".

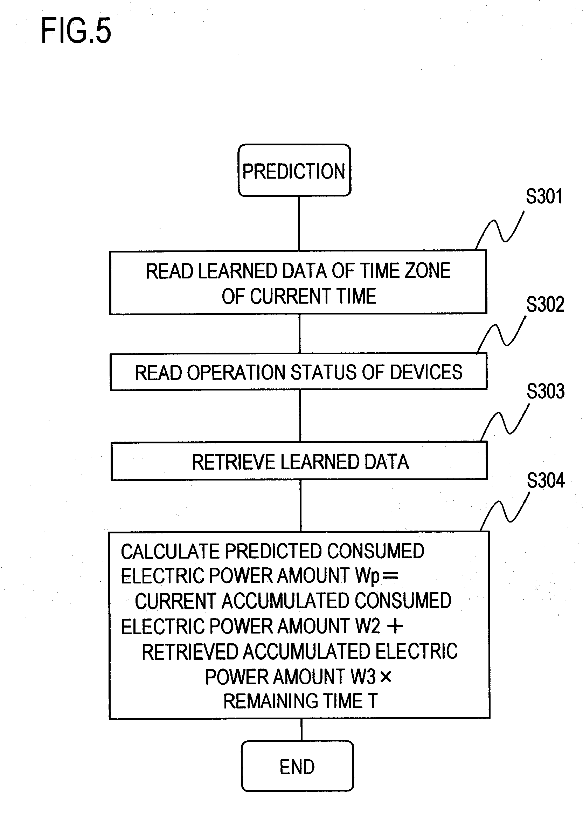

Next, with reference to FIG. 5, the procedure for performing prediction calculation, which is executed in step S300 in FIG. 3, will be described. The procedure of step S300 in FIG. 3 involves the operations of steps S301 to S304 in FIG. 5, and the flow executes steps S301, S302, S303, and S304 in this order.

In step S301, the controller 12 (CPU 23) checks which time zone the current time read in step S100 belongs to, and reads the learned data corresponding to the time zone to which the current time belongs.

In step S302, the store controller 12 reads, over the network 20, operation status data representing the current operation status of the individual control target devices. The read operation here is the same as that performed in step S202 described previously.

In step S303, the store controller 12 retrieves, from the learned data read in step S301, learned data that agrees with the operation status of the control target devices represented by the operation status data read in step S302. Here, the "learned data that agrees" may include not only that which perfectly agrees but also that only partially agrees; it may even include learned data that is found to approximately agree.

In step S304, the store controller 12 performs calculation to predict, as a predicted consumed electric power amount Wp, the total consumed electric power amount within the current set time span (the 30 minutes' time span starting at 9:00 and ending at 9:30), that is, before the end thereof. When the current accumulated consumed electric power amount is represented by W2 as noted previously, and in addition the retrieved accumulated electric power amount is represented by W3 and the time remaining before the end of the set time span is represented by T, then the predicted consumed electric power amount Wp is calculated according to formula (1) below.

$$Wp = W2 + W3 \times T \tag{1}$$

The retrieved accumulated electric power amount W3 is, for example, the average accumulated electric power amount or the maximum accumulated electric power amount corresponding to the learned data that has been found to agree in the retrieval in step S303. If there are a plurality of sets of learned data that have been found to agree in the retrieval in step S303, for example, one of them is selected. Then, the average accumulated electric power amount or the maximum accumulated electric power amount corresponding to the selected set of learned data is adopted as the retrieved accumulated electric power amount W3. Alternatively, when there are a plurality of sets of learned data that have been found to agree in the retrieval in step S303, an electric power amount calculated based on a plurality of average accumulated electric power amounts or a plurality of maximum accumulated electric power amounts corresponding respectively to those sets of learned data may be adopted as the retrieved accumulated electric power amount W3.

Alternatively, as the retrieved accumulated electric power amount W3, the accumulated electric power amount in the latest one minute may be adopted. That is, as the retrieved accumulated electric power amount W3, the electric power amount calculated by subtracting "the accumulated consumed electric power amount W2 one minute ago" from "the accumulated consumed electric power amount W2 at the moment" may be adopted to calculate the predicted consumed electric power amount Wp according to formula (1) above. In this case, the predicted consumed electric power amount Wp is calculated on the assumption that how electric power has been consumed during the latest one minute persists until the end of the set time span. This is simply linear prediction, which does not require the use of learned data.

The above-described methods and procedures for prediction calculation of the electric power amount are merely examples; it is possible to adopt any method other than those using learned data as described above.

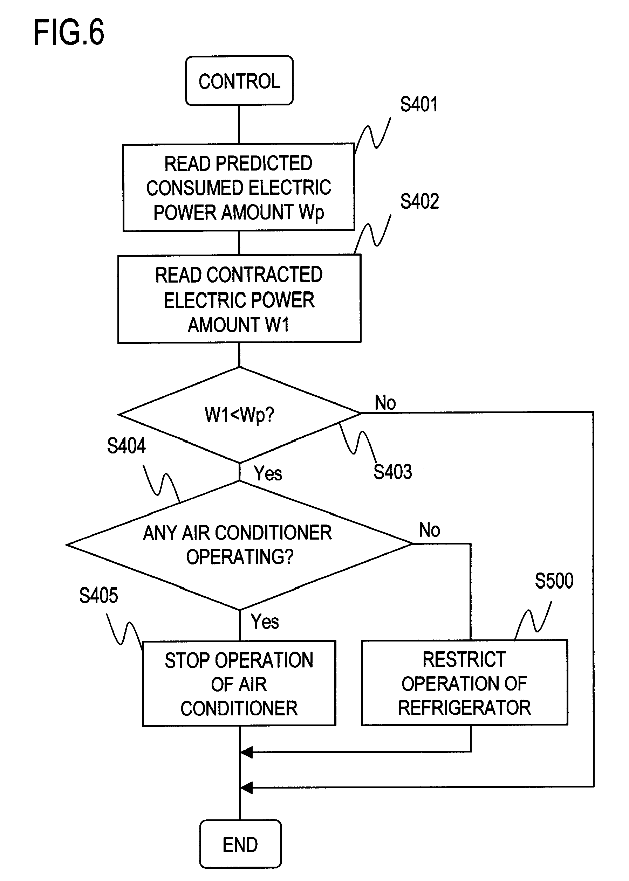

Next, with reference to FIG. 6, the procedure for controlling the operation of the individual control target devices, which is executed in step S400 in FIG. 3, will be described. The procedure of step S400 in FIG. 3 involves the operations of steps S401 to S405 and S500 in FIG. 6.

In step S401, the CPU 23 reads the predicted consumed electric power amount Wp calculated in step S300, and the flow then proceeds to step S402.

In step S402, the CPU 23 reads the contracted electric power amount W1, and the flow then proceeds to step S403. The contracted electric power amount W1 is identified by data that is previously stored, for example, in the storage section 24.

In step S403, the CPU 23 compares the predicted consumed electric power amount Wp and the contracted electric power amount W1 read in steps S401 and S402. If the predicted consumed electric power amount Wp is larger than the contracted electric power amount W1, the flow proceeds to step S404 to control the operation of the control target devices. If the predicted consumed electric power amount Wp is smaller than or equal to the contracted electric power amount W1, the procedure of FIG. 6, that is, the procedure of step S400 in FIG. 3, is ended, and the flow proceeds to step S600.

In step S404, the CPU 23 checks whether or not any air conditioner 17 is operating. If any air conditioner 17 is operating, the flow proceeds to step S405, where the operation of the operating air conditioner 17 is stopped. If no air conditioner 17 is operating, the flow proceeds to step S500, where control is so performed as to restrict the operation of the refrigerators 15. In the following description, this control may be referred to as "refrigerator operation restricting control".

In refrigerator operation restricting control, instead of the operation of the refrigerators 15 being directly stopped, the set temperature for the showcases 16 connected to the refrigerators 15 is adjusted and thereby the operation of the refrigerators 15 is controlled indirectly. Specifically, the set temperature is changed to a temperature higher than a predetermined value. If even this fails to sufficiently reduce the consumed electric power amount, the operation of the refrigerators 15 is stopped directly.

Described in more general terms, the control performed here by the store controller 12 is as follows. To direct-control target devices, of which the operation status (operation conditions) is controlled directly by the store controller 12, the store controller 12 outputs instruction information for controlling their operation status. In this way, the operation status of direct-control target devices is controlled (for example, the set temperature is changed, or the operation duration is changed). Then, as a result, the operation status of indirect-control target devices, which operate according to the operation status of the direct-control target devices, is controlled indirectly (for example, the operation duration is changed indirectly). Here, indirect-control target devices denote devices that are connected to the network 20 and can thus accept control by the store controller 12 but that are currently not under direct control of the store controller 12.

In this embodiment, the direct-control target devices correspond to the showcases 16, and the indirect-control target devices correspond to the refrigerators 15. In this case, the operation status (operation conditions) of the direct-control target devices include the set temperature for the showcases 16 etc. The above mentioned instruction information includes information with which to instruct the showcases 16 on the set temperature. Incidentally, the instruction information is created by the CPU 23, or by the device control section 26 according to instructions from the CPU 23.

The control described above is useful in a case where, as with the refrigerators 15 and the showcases 16, the operation of some devices depend on the operation of other devices; it is particularly useful when the showcases 16 are under the control of the store controller 12 and the refrigerators 15 is not under the control of the store controller 12.

Now, an additional explanation is given of the set temperature mentioned above. The showcases 16 are each given a set temperature. The store controller 12 can change the set temperatures corresponding to the showcases 16 individually. The showcases 16 are each provided with a thermometer (unillustrated) for measuring the temperature inside their cooling space. Specifically, in each showcase 16, the thermometer measures the temperature in a particular part in the cooling space. In the following description, the temperature measured there is referred to as the "measured temperature". The measured temperature corresponds to the interior temperature of the showcase 16

In each showcase 16, the set temperature denotes the target temperature to be followed by the measured temperature measured with the thermometer provided in the showcase 16. Each showcase 16 adjusts the amount of refrigerant that it takes in in such a way as to keep the measured temperature and the set temperature equal. In the steady state, the measured temperature and the set temperature are equal (or approximately equal); immediately after defrosting operation or in other situations, however, they significantly deviate from each other.

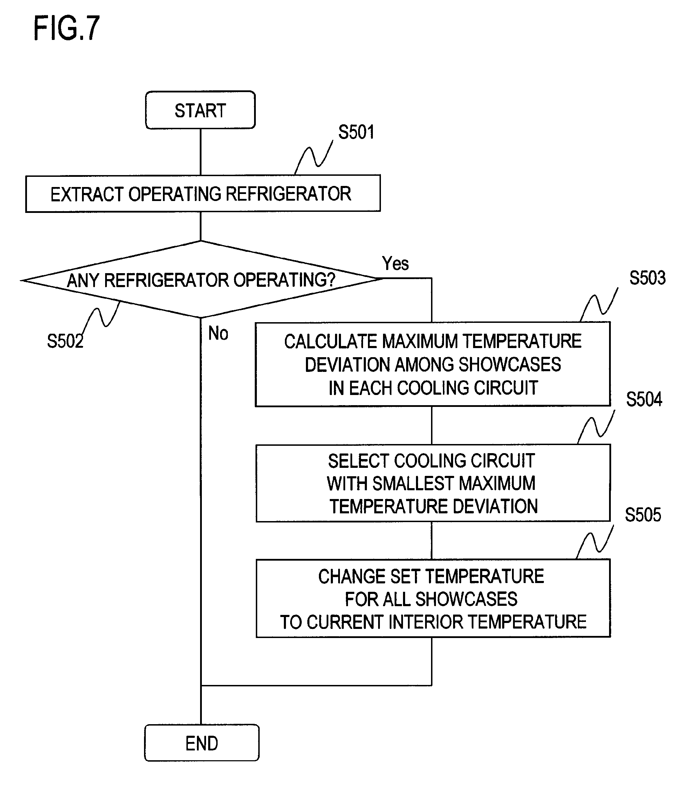

With reference to FIG. 7, the procedure for controlling the restriction of the operation of refrigerators, which is executed in step 500 shown in FIG. 6, will be described. The procedure of S500 in FIG. 6 involves the operations of steps S501 to S505 in FIG. 7. Here, it is assumed that there are provided a plurality of cooling circuits each composed of a refrigerator 15 and a plurality of showcases 16. Moreover, the store controller 12 periodically reads the measurement temperature in each showcase 16 over the network 20. The read operation here is executed, for example, in step S302 shown in FIG. 5.

First, in step S501, the CPU 23 extracts information on the presence of any operating refrigerator 15, and the flow then proceeds to step S502.

In step S502, based on the information extracted in step S501, the CPU 23 checks whether or not any refrigerator 15 is operating. Specifically, it checks whether or not there is any refrigerator 15 for which the solenoid valve of a showcase 16 is open and the refrigerant is being fed to the showcase 16. If any refrigerator 15 is operating, the flow proceeds to step S503, and otherwise the procedure of FIG. 7, that is, the procedure of step S500 in FIG. 6, is ended.

In step S503, to decide which of the refrigerators 15 to select to restrict the operation thereof, for each cooling circuit, the CPU 23 calculates, as a representative temperature deviation value there, the maximum value of the temperature deviations. More specifically, in each cooling circuit, and for each of the showcases 16 belonging thereto, the temperature deviation of the measured temperature from the set temperature is calculated, and, of the thus calculated temperature deviations, the maximum value is taken as the representative temperature deviation value of this cooling circuit. For example, in a case where a cooling circuit α includes three showcases 16, with respect to this cooling circuit

$\alpha$, three temperature deviations are calculated. Among these temperature deviations, the maximum temperature deviation is taken as the representative temperature deviation value of the cooling circuit $\alpha$. On completion of the operation of step S503, the flow proceeds to step S504.

In step S504, by referring to the representative temperature deviation value calculated for each cooling circuit, the CPU 23 selects, as a restriction target circuit (stop target circuit), the cooling circuit corresponding to the smallest representative temperature deviation value.

The showcases 16 connected to a given refrigerator 15 act as a load to the refrigerator 15. The operations in steps S503 and S504 can be said to be performed to calculate the heaviness of the load to each refrigerator 15 to select, as a restriction target circuit, the cooling circuit corresponding to a refrigerator 15 to which the load is light. As described above, the heaviness of loads is evaluated, for example, by temperature deviations. In the example described above, the maximum value of temperature deviations is taken as the representative temperature deviation value; instead, for each cooling circuit, the average value of temperature deviations may be calculated so as to be taken as the representative temperature deviation value.

In step S505, the CPU 23 (the device control section 26) changes the set temperature for all the showcases 16 belonging to the cooling circuit selected as the restriction target circuit to a temperature higher than a predetermined value (specifically, it creates and outputs instruction information to achieve that).

For example, the set temperature for all the showcases 16 belonging to the cooling circuit selected as the restriction target circuit may be set at the current measured temperature (interior temperature). Specifically, for example, in a case where the restriction target circuit includes a first, a second, and a third showcases 16 (three in total) and their respective current measured temperatures are 5°C, 7°C, and 8°C, their set temperatures may be set at 5°C, 7°C, and 8°C, respectively. This stops the operation of the refrigerator 15 belonging to the restriction target circuit. FIG. 7 shows an example of such a case.

Through the refrigerator operation restricting control described above, the operation duration of a refrigerator 15 of the cooling circuit selected as a restriction target circuit is shortened. Furthermore, this refrigerator operation restricting control (that is, the procedure shown in FIG. 7) is repeated until eventually the operation durations of all the refrigerators 15 are shortened.

A specific example of this will be presented below. As described earlier, after defrosting is performed, pull-down operation is performed for quick cooling. In principle, the set temperature is set at a comparatively low temperature when pull-down operation is performed, and this temperature is called the first set temperature.

In a case where the inequality "W1 < Wp" does not hold (see step S403 in FIG. 6), when a showcase 16 performs pull-down operation, the set temperature for that showcase 16 is set at the first set temperature mentioned above.

By contrast, in a case where the inequality "W1 < Wp" holds and the flow proceeds to step S505, the set temperature for pull-down operation of showcases 16 belonging to a restriction target circuit is set at a second set temperature higher than the first set temperature. Thus, when showcases 16 belonging to a restriction target circuit perform pull-down operation, the operation duration (execution duration) of the pull-down operation is shorter than when the inequality "W1 < Wp" does not hold. Consequently, the amount of electric power consumed by the refrigerators 15 is reduced.

Moreover, by appropriately adjusting the set temperature (corresponding to the second set temperature mentioned above) to which the previously set temperature is changed in step S505, it is possible to reduce the amount of electric power consumed by the refrigerators 15 while preventing the food inside the showcases 16 from melting and degrading in quality.

Incidentally, if, even after the operation of all the refrigerators 15 have been stopped through the procedure described above, the predicted consumed electric power amount Wp is still likely to exceed the contracted electric power amount W1, for example, as described earlier, a buzzer (unillustrated) is sounded. Then, the storekeeper copes with the situation, for example, by manually stopping the supply of electric power to the devices other than those the store controller 12 can control (unillustrated).

At the start of the next set time span, the set temperature for all the showcases 16 is set back to the original predetermined value (corresponding to the first set temperature mentioned above), and ordinary cooling operation is restarted.

As described above, the refrigerator 15 corresponding to a showcase 16 in which the temperature deviation of the current measured temperature (interior temperature) from the set temperature is small is selected, and the set temperature for that showcase 16 is changed to a temperature higher than a predetermined value; thus, the operation duration of the refrigerator 15 is reduced. With this embodiment, it is possible to prevent the food inside the showcase 16 from melting and degrading in quality, and simultaneously to reduce the operation duration of pull-down operation and thereby reduce the consumed electric power amount.

The above method is applicable also to warm-keeping cases (unillustrated). In this case, the warm-keeping cases correspond to the showcases 16 described above. The difference is that, unlike the showcases 16, the warm-keeping cases function as devices for keeping food and the like at temperatures higher than the ambient temperature.

For example, when the predicted consumed electric power amount is larger than the contracted electric power amount, the set temperature for the warm-keeping cases is changed to a temperature lower than a predetermined value to reduce the heating operation duration of the warm-keeping cases. In this way, it is possible to prevent quality degradation of food (for example, hardening of the coating of fried food) resulting from its being re-heated after once becoming cold. It is also possible to reduce the heating operation duration and thereby reduce the consumed electric power amount. Incidentally, in a case where there are provided a plurality of warm-keeping cases, selection of those targeted for reduction of the heating operation duration and other procedures can be achieved by method similar to those used in the embodiment described above.

The predicted consumed electric power amount calculating means that performs calculation to predict, as a predicted consumed electric power amount, the total amount of electric power consumed in a given unit period is realized by the store controller 12 (mainly the CPU 23). The "unit period" corresponds to the set time span mentioned above. In the context of the embodiment described above, the "device unit" corresponds to all the load devices connected to a power system. The device control means also is realized by the store controller 12 (mainly the device control section 26, or mainly the device control section 26 and the CPU 23).

The electric power amount control apparatus of the embodiment described above can be realized with hardware such as a CPU, a memory, and other LSIs (large-scale integration) incorporated in a computer, or with software such as a program that enables a computer to execute the functions of the electric power amount control apparatus. The electric power amount control apparatus of the embodiment described above can be realized with a combination of hardware and software.

In embodiments of the present invention, many modifications and variations are possible within the scope of the technical idea presented in the appended claims.

## Claims

1. An electric power amount control apparatus comprising:

   predicted consumed electric power amount calculating means for predicting, as a predicted consumed electric power amount, a total amount of electric power expected to be consumed in a given unit period by a device unit including
   a direct-control target device whose operation status is controlled directly by receiving instruction information and an indirect-control target device whose operation status is controlled indirectly according to the operation status of the direct-control target device; and
   device controlling means for controlling the operation status of the direct-control target device by generating the instruction information based on the predicted consumed electric power amount and then outputting the instruction information to the direct-control target device,

   wherein
   the device controlling means changes the operation status of the direct-control target device based on a result of comparison between the predicted consumed electric power amount and a previously set threshold value, and through this change an operation duration of the indirect-control target device, which is operated according to the operation status of the direct-control target device, is changed.

2. The electric power amount control apparatus of claim 1, wherein
   the direct-control target device is a device for controlling a temperature inside the direct-control target device itself, and the instruction information includes information specifying a set temperature to be followed by the temperature.

3. The electric power amount control apparatus of claim 2, wherein
   when the predicted consumed electric power amount is larger than a predetermined electric power amount previously set as the threshold value, the device controlling means outputs the instruction information so as to change the set temperature, and thereby shortens the operation duration of the indirect-control target device.

4. The electric power amount control apparatus of claim 3, wherein
   the direct-control target device is a refrigerator/freezer showcase that is built to be capable of cooling an interior of the direct-control target device by use of a refrigerant,
   the indirect-control target device is a refrigerant feeding device that feeds out the refrigerant to the direct-control target device, and
   when the predicted consumed electric power amount is larger than the predetermined electric power amount, the device controlling means makes the set temperature corresponding to cooling operation performed by using the refrigerant feeding device after defrosting operation of the refrigerator/freezer showcase higher than when the predicted consumed electric power amount is smaller than the predetermined electric power amount, and thereby makes an operation duration of the cooling operation shorter than when the predicted consumed electric power amount is smaller than the predetermined electric power amount.

**5.** The electric power amount control apparatus of one of claims 2 to 4, wherein
the device unit includes a plurality of direct-control target devices and a plurality of indirect-control target devices,
the device controlling means calculates deviations of temperatures inside the individual direct-control target devices from the set temperature, and based on the calculated deviations the device controlling means selects from among the indirect-control target devices part of them,
then based on the result of the comparison between the predicted consumed electric power amount and the threshold value, the device controlling means changes operation status of the direct-control target device corresponding to the selected indirect-control target device so as to thereby change operation duration of the selected indirect-control target device.

**6.** An electric power amount control method comprising:

a step of predicting, as a predicted consumed electric power amount, a total amount of electric power expected to be consumed in a given unit period by a device unit including
a direct-control target device whose operation status is controlled directly by receiving instruction information and an indirect-control target device whose operation status is controlled indirectly according to the operation status of the direct-control target device; and
a step of controlling the operation status of the direct-control target device by generating the instruction information based on the predicted consumed electric power amount and then outputting the instruction information to the direct-control target device,

wherein
the operation status of the direct-control target device is changed based on a result of comparison between the predicted consumed electric power amount and a previously set threshold value, and through this change an operation duration of the indirect-control target device, which is operated according to the operation status of the direct-control target device, is changed.

**7.** The electric power amount control method of claim 6, wherein
the direct-control target device is a device for controlling a temperature inside the direct-control target device itself, and the instruction information includes information specifying a set temperature to be followed by the temperature.

**8.** The electric power amount control method of claim 7, wherein
when the predicted consumed electric power amount is larger than a predetermined electric power amount previously set as the threshold value, the instruction information is outputted so as to change the set temperature, and thereby the operation duration of the indirect-control target device is shortened.

**9.** The electric power amount control method of claim 8, wherein
the direct-control target device is a refrigerator/freezer showcase that is built to be capable of cooling an interior of the direct-control target device by use of a refrigerant,
the indirect-control target device is a refrigerant feeding device that feeds out the refrigerant to the direct-control target device, and
when the predicted consumed electric power amount is larger than the predetermined electric power amount, the set temperature corresponding to cooling operation performed by using the refrigerant feeding device after defrosting operation of the refrigerator/freezer showcase is made higher than when the predicted consumed electric power amount is smaller than the predetermined electric power amount, and thereby an operation duration of the cooling operation is made shorter than when the predicted consumed electric power amount is smaller than the predetermined electric power amount.

**10.** The electric power amount control method of one of claims 7 to 9, wherein
the device unit includes a plurality of direct-control target devices and a plurality of indirect-control target devices, deviations of temperatures inside the individual direct-control target devices from the set temperature are calculated, and based on the calculated deviations, from among the indirect-control target devices, part of them are selected, and

then based on the result of the comparison between the predicted consumed electric power amount and the threshold value, operation status of the direct-control target device corresponding to the selected indirect-control target device is changed, and thereby operation duration of the selected indirect-control target device is changed.

11. A program that enables a computer to execute functions of the individual means provided in the electric power amount control apparatus claimed in one of claims 1 to 5.

12. A program that enables a computer to execute the electric power amount control method claimed in one of claims 6 to 10.

# FIG.1

POWER LINE

POWER SYSTEM

11 — POWER METER

12 — STORE CONTROLLER

13 — ILLUMINATION / DEVICE CONTROLLER

14 — OTHER DEVICES / DEVICE CONTROLLER

17 — AIR CONDITIONER / DEVICE CONTROLLER

18 — OUTDOOR UNIT

20 — COMMUNICATION NETWORK

15 — DEVICE CONTROLLER / REFRIGERATOR

19

16 — DEVICE CONTROLLER / SHOWCASE

POWER LINE

EP 1 758 225 A2

FIG.2

EP 1 758 225 A2

# FIG.3

```
              ┌──────────────┐
              │    START     │
              └──────┬───────┘
                     │              ～S100
              ┌──────┴───────┐
              │     READ     │
              │ CURRENT TIME │
              └──────┬───────┘      ～S200
              ┌──────┴───────┐
              │   LEARNING   │
              └──────┬───────┘      ～S300
              ┌──────┴───────┐
              │  PREDICTION  │
              └──────┬───────┘      ～S400
              ┌──────┴───────┐
              │   CONTROL    │
              └──────┬───────┘
                     │
                ╱────┴────╲
              ╱             ╲         No
            ╱ ONE MINUTE PASSED? ╲────────
            ╲                   ╱
              ╲               ╱
                ╲────┬────╱
                  Yes    ～S600
```

# FIG.4

```
        ┌──────────────┐
        │   LEARNING   │
        └──────┬───────┘
               │                        S201
   ┌───────────┴──────────────┐
   │  READ ACCUMULATED CONSUMED │
   │   ELECTRIC POWER AMOUNT    │        S202
   └───────────┬──────────────┘
   ┌───────────┴──────────────┐
   │    READ OPERATION STATUS  │
   │        OF DEVICES         │        S203
   └───────────┬──────────────┘
   ┌───────────┴──────────────┐
   │      STORE RAW DATA       │        S204
   └───────────┬──────────────┘
   ┌───────────┴──────────────┐
   │    CREATE LEARNED DATA    │
   └───────────┬──────────────┘
               │
        ┌──────┴───────┐
        │     END      │
        └──────────────┘
```

# FIG.5

```
                    ┌──────────────┐
                    │  PREDICTION  │
                    └──────┬───────┘                    S301
                           │
         ┌─────────────────┴─────────────────┐
         │   READ LEARNED DATA OF TIME ZONE   │
         │          OF CURRENT TIME           │        S302
         └─────────────────┬─────────────────┘
                           │
         ┌─────────────────┴─────────────────┐
         │   READ OPERATION STATUS OF DEVICES │
         └─────────────────┬─────────────────┘        S303
                           │
         ┌─────────────────┴─────────────────┐
         │        RETRIEVE LEARNED DATA       │
         └─────────────────┬─────────────────┘        S304
                           │
     ┌─────────────────────┴─────────────────────┐
     │  CALCULATE PREDICTED CONSUMED              │
     │  ELECTRIC POWER AMOUNT Wp=                 │
     │    CURRENT ACCUMULATED CONSUMED            │
     │  ELECTRIC POWER AMOUNT W2 +                │
     │     RETRIEVED ACCUMULATED ELECTRIC         │
     │          POWER AMOUNT W3×                  │
     │          REMAINING TIME T                  │
     └─────────────────────┬─────────────────────┘
                           │
                    ┌──────┴───────┐
                    │     END      │
                    └──────────────┘
```

# FIG.6

```
                    ┌──────────────┐
                    │   CONTROL    │
                    └──────┬───────┘
                           │                        S401
                    ┌──────┴───────────┐
                    │ READ PREDICTED   │
                    │ CONSUMED ELECTRIC│
                    │ POWER AMOUNT Wp  │           S402
                    └──────┬───────────┘
                    ┌──────┴───────────┐
                    │ READ CONTRACTED  │
                    │ ELECTRIC POWER   │
                    │ AMOUNT W1        │
                    └──────┬───────────┘
                           │
                      ╱────┴─────╲              No
                    ╱   W1<Wp?     ╲──────────────────────┐
          S404      ╲             ╱    S403              │
                      ╲────┬─────╱                        │
                           │ Yes                          │
                      ╱────┴──────────╲                   │
                    ╱  ANY AIR         ╲      No          │
                   ╱   CONDITIONER      ╲─────────┐       │
          S405      ╲  OPERATING?      ╱          │   S500│
                      ╲────┬─────────╱            │       │
                           │ Yes                  │       │
                    ┌──────┴───────┐       ┌──────┴───────┐
                    │ STOP OPERATION│       │  RESTRICT    │
                    │   OF AIR      │       │ OPERATION OF │
                    │ CONDITIONER   │       │ REFRIGERATOR │
                    └──────┬───────┘       └──────┬───────┘
                           │◄────────────────────┘       │
                           │◄───────────────────────────┘
                    ┌──────┴───────┐
                    │     END      │
                    └──────────────┘
```

# FIG.7

START

S501

EXTRACT OPERATING REFRIGERATOR

ANY REFRIGERATOR OPERATING?　　Yes

S503

S502　　No

CALCULATE MAXIMUM TEMPERATURE
DEVIATION AMONG SHOWCASES
IN EACH COOLING CIRCUIT

S504

SELECT COOLING CIRCUIT
WITH SMALLEST MAXIMUM
TEMPERATURE DEVIATION

S505

CHANGE SET TEMPERATURE
FOR ALL SHOWCASES
TO CURRENT INTERIOR TEMPERATURE

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10339546 A